# EUROPÄISCHE PATENTSCHRIFT

(11) **EP 0 609 173 B1**
(45) Veröffentlichungstag und Bekanntmachung des Hinweises auf die Patenterteilung: **04.06.1997**
(21) Anmeldenummer: 94810021.9
(22) Anmeldetag: 14.01.1994
(51) Int. Cl.: F24J 2/04, F24J 2/50, F24J 2/00

(54) **Sonnenkollektor-Modul**
Solar collector module
Module de collecteur solaire

(30) Priorität: 25.01.1993 CH 205/93
(43) Veröffentlichungstag der Anmeldung: 03.08.1994
(73) Patentinhaber: Ernst Schweizer AG, Metallbau, Zürich, 8047 Zürich (CH)
(72) Erfinder: Haller, Andreas, CH-5400 Baden (CH); Glauser, Heini, CH-5200 Windisch (CH)
(74) Vertreter: Münch, Otto

(56) Entgegenhaltungen:
- EP-A- 0 123 091
- EP-A- 0 367 045
- EP-A- 0 473 859
- EP-A- 0 492 005
- DE-A- 2 938 762
- FR-A- 2 444 131
- US-A- 4 114 595
- SOLAR ENERGY, Bd.49, Nr.5, November 1992, ELMSFORD Seiten 413 - 427 BRAUN ET AL 'transparent insulation of building facades-steps from research to commercial applications'

## Beschreibung

Aus der EP-A 492005 ist ein Sonnenkollektor-Modul gemäss Oberbegriff des Anspruchs 1 bekannt. Es umfasst ein topfförmiges Element, welches eine Absorberplatte und einen Rahmen bildet. An den freien Enden des Rahmens ist eine Glassplatte gehalten. Der Raum zwischen der Glasplatte und der Absorberplatte ist vollständig mit einer transparenten Isolation gefüllt. Von der Absorberplatte stehen thermisch leitende Stäbe oder Rippen ab. Diese sind mit einem elastischen thermischen Leiter beschichtet und in Bohrungen des Mauerwerks eingesteckt. Die Module sind damit an der Mauer gehalten. Die Montage dieser Module ist allerdings aufwendig. Ebenso ist die Demontage der Module schwierig was die Wartung und das Auswechseln beschädigte Module erschwert. Weil die Wärme durch direkte mechanische Berührung der gut leitende Stäbe übertragen wird, treten relativ grosse Temperaturschwanken im Mauerwerk auf.

Andererseits sind aus,,Solar Energy" Bd.49, Nr.5, Nov. 1992, S.418-419 Module mit einer transparenten Isolation bekannt, welche keine Absorberplatte aufweisen. Diese Module werden vor einer lichabsorbierenden Wand montiert. Sie haben einen wärmeisolierenden Rahmen. Die vordere Glasplatte hat Abstand von der transparenten Isolation, welche in diesem Fall eine Vielzahl von Kanälen senkrecht zur Glasplatte hat. Der Rahmen wird an dem Mauerwerk montiert. Auch bei dieser Lösung treten relativ grosse Temperaturschwankungen im Mauerwerk auf, weil die kurzwellige Sonnenstrahlung direkt auf das Mauerwerk einwirkt.

Der vorliegenden Erfndung liegt die Aufgabe zu Grunde, ein Modul der eingangs genannten Art anzugeben, bei welchem im Mauerwerk geringere Temperaturschwankungen auftreten. Diese Aufgabe wird durch die kennzeichnende Merkmale des Anspruchs 1 gelöst. Weil die erfindungsgemässen Module Haltemittel am Rahmen aufweisen, sind sie auf der Baustelle einfach zu montieren, vergleichbar mit der Montage anderer Fassadenelemente. Die erfindungsgemässe Lösung hat darüber hinaus eine Reihe weiterer Vorteile:
- Weil der Absorber ins abgeschlossene Modul eingebaut ist, wird eine innere Verschmutzung vermieden.
- Die Wärmeenergie wird auf das Mauerwerk über einen Luftspalt durch Wärmeleitung und Wärmestrahlung übertragen, statt durch kurzwellige Strahlung. Dies hat geringere Temperaturschwankungen im Mauerwerk und damit geringere Spannungen zur Folge.
- Es besteht die Möglichkeit der farbigen Gestaltung durch elementweise Wahl der Hintergrundfarbe und der Farbe des Rahmens. Dies ergibt eine architektonisch ansprechende Integration der Wandheizung in die Fassade.
- Sollte ein Modul beschädigt werden, kann es einfach ausgetauscht werden. Damit sind die Reparaturkosten gering.

Nachfolgend wir ein Ausführungsbeispiel der Erfindung anhand der Zeichnungen erläutert. Darin zeigt:
- Figur 1: einen Horizontalschnitt durch zwei aneinander grenzende Module,
- Figur 2: einen Vertikalschnitt, und
- Figur 3: eine perspektivische Ansicht, teilweise im Schnitt, von in einer Fassade eingebauten Modulen.

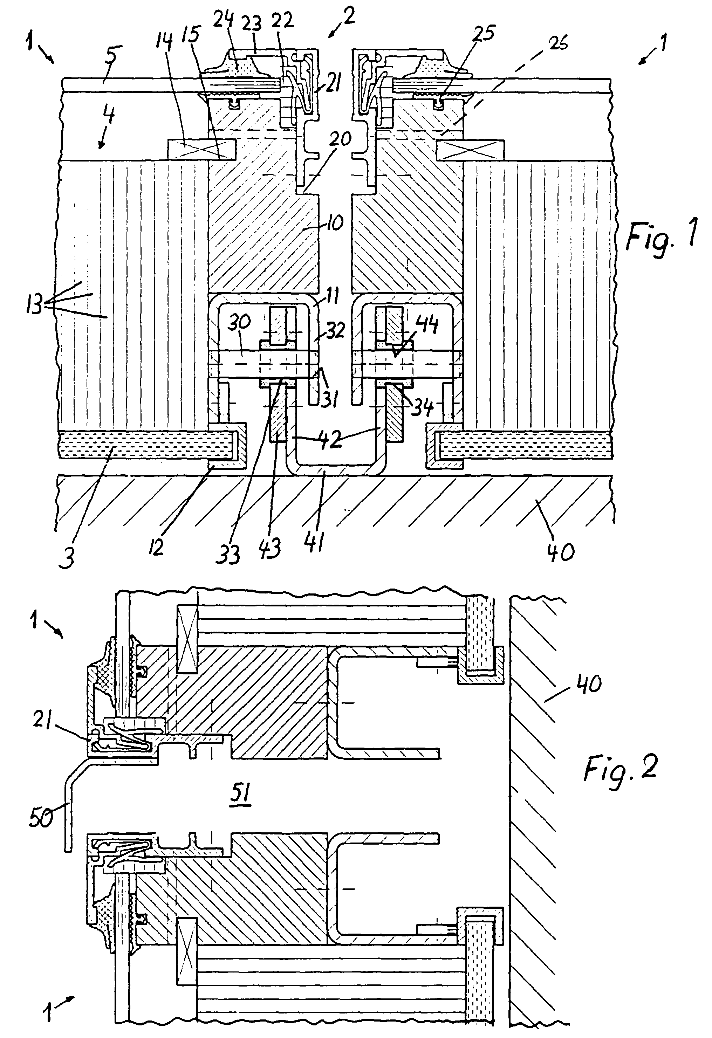

In Figur 1 sind zwei nebeneinander angeordnete Module 1 im Horizontalschnitt, teilweise weggeschnitten dargestellt. Die Module 1 bestehen aus einem Rahmen 2, einer Absorberplatte 3, einem transparenten Isolationskörper 4 und einer Glasplatte 5. Der Rahmen 2 besteht aus einem äusseren, thermisch isolierenden Holzrahmen 10 und einem daran angeschraubten inneren Rahmen 11 aus einem Aluminium-U-Profil. Am inneren Rand der U-Profils 11 ist ein weiteres, gegen die Innenseite des Rahmens 2 offenes U-Profil 12 festgeschraubt, in welches die Absorberplatte 3 mit Spiel eingesetzt ist. Die Platte 3 besteht vorzugsweise aus asbestfreiem Faserzement und hat eine dunkle, zum Beispiel dunkelrote oder dunkelgraue Vorderseite zur Absorption von Licht. Der Isolationskörper 4 ist direkt auf die Platte 3 aufgesetzt. Er besteht aus transparentem Kunststoff und hat eine Vielzahl enger Kanäle 13 senkrecht zur Ebene der Platte 3. Der Körper 4 kann zum Beispiel ähnlich aufgebaut sein wie ein Paket übereinander geschichteter Wellpappe-Zuschnitte, oder er kann eine Bienenwabenstruktur haben. Der Isolationskörper 4 ist vorn mittels eines umlaufenden, transparenten Polykarbonatstreifens 14 gehalten, der in eine Nut 15 des Holzrahmens 10 eingesteckt ist.

In einem äusseren Falz 20 des Holzrahmens 10 ist ein weiteres Aluminiumprofil 21 angeschraubt, gegen welches die Glasplatte 5 über Distanzklötze 22 abgestützt ist. Im Profil 21 ist ein weiteres Aluminiumprofil als Glasleiste 23 eingeschnappt, die mit ihrem freien Rand einen elastomeren, zu einem Rahmen zusammenvulkanisierten Dichtstreifen 24 gegen die Glasplatte 5 drückt. Die Glasplatte 5 ist innen auf einem weiteren Gummistreifen 25 abgestützt, der in einer Nut des Holzrahmens 10 gehalten ist. Die Glasplatte 5 hat vom Isolationskörper 4 einen Abstand von etwa 20-25 mm. Der Luftspalt dazwischen ist über mehrere Entspannungsbohrungen 26 mit der Aussenatmosphäre verbunden.

An den beiden seitlichen Rändern des Rahmens 2 sind je zwei Bolzen 30 in Bohrungen 31 in den Schenkeln 32 des U-Profils 11 eingepresst. Auf die Bolzen 30 ist je eine Kunststoff-Büchse 33 mit einer Umfangsnut 34 aufgeschoben. Zur Montage der Module 1 an einer Wand 40 werden an dieser vertikale U-Profile 41 festgeschraubt. An den beiden Schenkeln 42 dieser Profile 41 sind Platten 43 angeschraubt, die Schlitze 44 zur Aufnahme der Nuten 34 der Büchse 33 haben. Die Schlitze 44 sind gegen aussen offen und verlaufen von dort zum Beispiel schräg oder L-förmig gegen die Wand 40 und nach unten. Damit können die Module 1 nach der Montage der U-Profile 41 bloss eingehängt werden. Die Platten 43 ermöglichen ein Ausrichten der Schlitze 44 bei unebenen Wänden 40. Die Profile 41 und Platten 43 werden so montiert, dass der Spalt zwischen den Absorberplatten 3 und der Wand 40 möglichst gering ist.

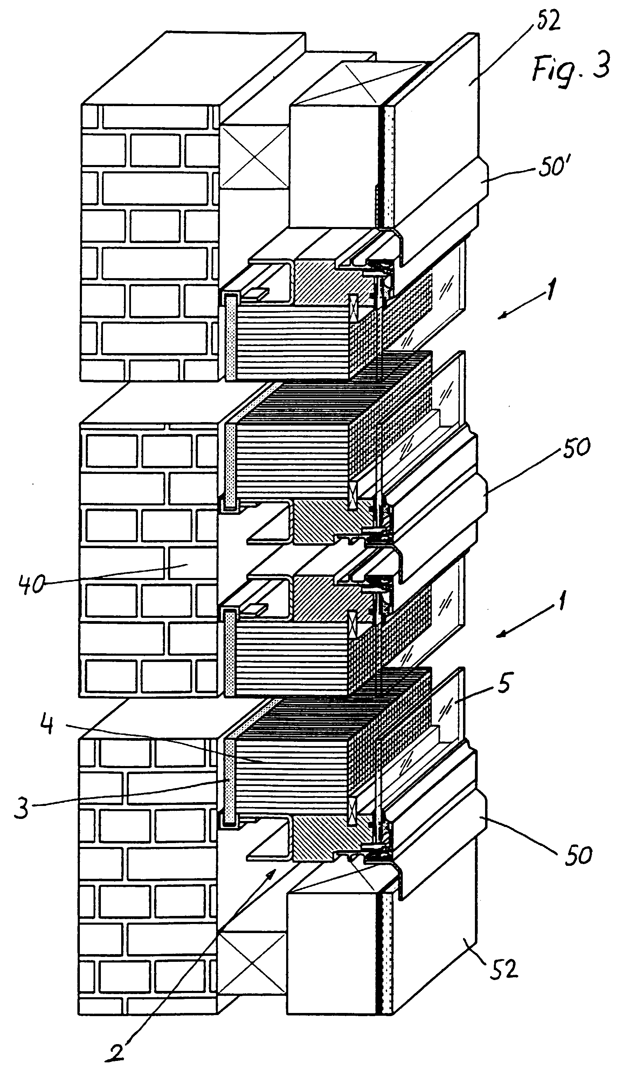

Am unteren Rand des Rahmens 2 ist am Profil 21 ein Wetterschenkel 50 montiert, der ein darunter montiertes, weiteres Modul 1 übergreift und den Eintritt von Regenwasser in den Spalt 51 zwischen den Modulen 1 verhindert. Der Wetterschenkel 50 des untersten Moduls 1 übergreift das darunterliegende Mauerwerk oder Fassadenelement 52 (Figur 3).

## Patentansprüche

1. Sonnenkollektor-Modul zur Montage an einer Gebäudewand, umfassend: einen rechteckigen Rahmen (2), eine auf der Rückseite des Rahmens (2) gehaltene Absorberplatte (3), einen auf die Absorberplatte (3) aufgesetzten, transparenten Isolationskörper (4), sowie eine im Rahmen gehaltene Glasplatte, dadurch gekennzeichnet, dass der Rahmen (2) mindestens teilweise aus einem thermisch isolierenden Material besteht, dass am Rahmen (2) Haltemittel (30, 33) zur Montage des Moduls (1) an einer Gebäudewand (40) angeordnet sind, wobei die Haltemittel so ausgebildet sind, daß im montierten Zustand zwischen Absorberplatte (3) und Gebäudewand (40) ein möglichst geringer Spalt vorhanden ist, dass die Glasplatte (5) im Rahmen (2) abdichtend eingesetzt ist und Abstand vom Isolationskörper (4) hat, und dass der Isolationskörper (4) eine Vielzahl von Kanälen (13) senkrecht zur Absorberplattenebene aufweist.

2. Modul nach Anspruch 1, wobei der Rahmen (2) aus einem äusseren Holzrahmen (10) und einem damit verschraubten, inneren Metallrahmen (11) besteht.

3. Modul nach Anspruch 2, wobei am Holzrahmen (10) aussen ein Metallprofil (21) angeschraubt ist, in welches eine Glasfalzleiste (23) eingesetzt ist, die über eine elastomere Dichtleiste (24) auf die Glasplatte (5) drückt.

4. Modul nach einem der Ansprüche 1-3, wobei der Isolationskörper (4) mittels in eine Nut (15) des Rahmens (2) eingesetzter, vorzugsweise transparenter Leisten (14) im Abstand von der Glasplatte (5) gehalten ist.

5. Modul nach einem der Ansprüche 1-4, wobei an einem Rand des Rahmens (2) ein überstehender Wetterschenkel (50) befestigt ist, der im montierten Zustand ein darunter angeordnetes, gleiches Modul (1) oder ein Mauerwerk übergreift.

6. Modul nach einem der Ansprüche 1-5, wobei die Haltemittel (30, 33) je zwei an gegenüberliegenden Seiten des Rahmens (2) eingesetzte, achsparallele Bolzen (30) umfassen.

## Claims

1. Solar collector module for assembly on a wall of a building, comprising: a rectangular frame (2), an absorber plate (3) held on the back of the frame (2), a transparent insulation element (4) fitted onto the absorber plate (3), and a glass panel held in the frame, characterized in that the frame (2) consists at least partially of a thermally insulating material, in that holding means (30, 33) for the assembly of the module (1) on a wall of a building (40) are arranged on the frame (2), the holding means being of such a design that, in the assembled state, there is the smallest possible gap between the absorber plate (3) and the wall of a building (40), in that the glass panel (5) is inserted in the frame (2) so that it is sealed off and has a spacing from the insulation element (4), and in that the insulation element (4) has a large number of ducts (13) perpendicular to the plane of the absorber plate.

2. Module according to Claim 1, wherein the frame (2) consists of an outer wooden frame (10) and an inner metal frame (11) which is screwed thereto.

3. Module according to Claim 2, wherein a metal profile (21) is screwed to the outside of the wooden frame (10), into which metal profile a rebate strip (23) is inserted, which presses onto the glass panel (5) via an elastomeric sealing strip (24).

4. Module according to one of Claims 1-3, wherein the insulation element (4) is held with spacing from the glass panel (5) by means of preferably transparent strips (14) inserted into a groove (15) in the frame (2).

5. Module according to one of Claims 1-4, wherein a projecting window drip (50) is attached to one edge of the frame (2), which window drip, in the assembled state, engages over a similar module (1) arranged below it or a masonry wall.

6. Module according to one of Claims 1-5, wherein the holding means (30, 33) each comprise two axially parallel bolts (30) inserted at opposite sides of the frame (2).

## Revendications

1. Module de collecteur solaire destiné à être monté sur un mur de bâtiment comprenant : un cadre rectangulaire (2), une plaque absorbante (3) retenue sur la face arrière du cadre (2), un corps isolant transparent (4) monté sur la plaque absorbante (3), ainsi qu'une plaque de verre retenue dans le cadre, caractérisé en ce que le cadre (2) est constitué au moins en partie par un matériau thermiquement isolant, que des moyens de retenue (30,33) pour le montage du module (1) sur le mur (40) du bâtiment sont disposés sur le cadre (2), les moyens de retenue étant agencés de telle sorte qu'à l'état monté, une fente aussi faible que possible est présente entre la plaque absorbante (3) et le mur (40) du bâtiment, que la plaque de verre (5) est insérée d'une manière étanche dans le cadre (2) et est située à distance du corps isolant (4), et que le corps isolant (4) comporte une multiplicité de canaux (13) perpendiculaires au plan de la plaque absorbante.

2. Module selon la revendication 1, dans lequel le cadre (2) est constitué d'un cadre extérieur en bois (10) et d'un cadre intérieur métallique (11), vissé sur le cadre en bois.

3. Module selon la revendication 2, dans lequel sur le cadre en bois (10) est vissé extérieurement un profilé métallique (21), dans lequel est insérée une latte de fixation de vitrage (23), qui appuie sur la plaque de verre (5) par l'intermédiaire d'une barrette d'étanchéité élastomère (24).

4. Module selon l'une des revendications 1 - 3, dans lequel le corps isolant (4) est maintenu à distance de la plaque de verre (5) au moyen d'une barrette de préférence transparente (14), insérée dans une rainure (15) du cadre (2).

5. Module selon l'une des revendications 1 - 4, dans lequel sur le bord du cadre (2) est fixé un rejet d'eau saillant (50), qui à l'état monté s'étend au-dessus d'un module identique (1), situé au-dessous de lui-même, ou d'une maçonnerie de mur.

6. Module selon l'une des revendications 1 - 5, dans lequel les moyens de retenue (30,33) entourent respectivement deux goujons (30) à axes parallèles, qui sont insérés sur des côtés opposés du cadre (2).
